(19) Europäisches Patentamt
European Patent Office
Office européen des brevets

(11) EP 0 612 784 B1

(12) # EUROPÄISCHE PATENTSCHRIFT

(45) Veröffentlichungstag und Bekanntmachung des Hinweises auf die Patenterteilung:
**11.11.1998 Patentblatt 1998/46**

(51) Int Cl.[6]: **C08G 73/12**, C08G 69/10

(21) Anmeldenummer: **94101974.7**

(22) Anmeldetag: **09.02.1994**

(54) **Verfahren zur Herstellung von Polysuccinimid und Polyasparaginsäure**

Process for preparing polysuccinimide and polyaspartic acid

Procédé de préparation du polysuccinimide et de l'acide polyaspartique

(84) Benannte Vertragsstaaten:
**AT BE DE FR GB IT NL**

(30) Priorität: **22.02.1993 DE 4305368**
**06.05.1993 DE 4314965**
**08.06.1993 DE 4319044**

(43) Veröffentlichungstag der Anmeldung:
**31.08.1994 Patentblatt 1994/35**

(73) Patentinhaber: **BAYER AG**
**51368 Leverkusen (DE)**

(72) Erfinder:
- **Groth, Torsten, Dr.**
  **D-51061 Köln (DE)**
- **Joentgen, Winfried, Dr.**
  **D-50769 Köln (DE)**
- **Müller, Nikolaus, Dr.**
  **D-40789 Monheim (DE)**
- **Liesenfelder, Ulrich, Dr.**
  **D-50670 Köln (DE)**

(56) Entgegenhaltungen:
**EP-A- 0 256 366** **EP-A- 0 604 813**
**EP-A- 0 613 920** **WO-A-93/23452**
**DE-A- 2 253 190** **US-A- 4 590 260**

Bemerkungen:
Die Akte enthält technische Angaben, die nach dem Eingang der Anmeldung eingereicht wurden und die nicht in dieser Patentschrift enthalten sind.

EP 0 612 784 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von Polysuccinimid und Polyasparaginsäuren in einem Hochviskos-Reaktor.

Die Herstellung und Verwendung von Polyasparaginsäure (PAS) und ihrer Derivate ist seit langem Gegenstand zahlreicher Veröffentlichungen und Patente So kann die Herstellung durch thermische Polykondensation von Asparaginsäure erfolgen (J.Org. Chem. 26, 1084 (1961)).

US-A 4 839 461 (= EP-A 0 256 366) beschreibt die Herstellung von Polyasparaginsäure aus Maleinsäureanhydrid, Wasser und Ammoniak. Maleinsäureanhydrid wird in wäßrigem Medium unter Zugabe von konzentrierter Ammoniak-Lösung in das Monoammoniumsalz umgewandelt. Das Monoammoniumsalz wird in der Schmelze zu Polysuccinimid polymerisiert und zu PAS oder PAS-Salzen hydrolysiert.

Aus US-A 4 590 260 ( = JP-A 1984(59)-60160) ist bekannt, Aminosäuren zusammen mit Derivaten der Äpfel-, Malein- und/oder Furmarsäure bei 100 bis 225°C einer Polykondensation zu untenverfen. Gemäß US-A 4696981 werden bei derartigen Reaktionen Mikrowellen eingesetzt.

In DE-A 2253190 (= US-A 3846380) wird ein Verfahren zur Herstellung von Polyaminosäure-Derivaten, speziell Polyasparaginsäure-Derivaten beschrieben Danach werden neben Asparaginsäure auch Maleinsäure-Derivate (Monoammoniumsalz und Monoamid) durch thermische Polymerisation zur Herstellung der Zwischenstufe Polysuccinimid, das seinerseits in geeigneten Lösungsmitteln mit Aminen zu den gewünschten Derivaten umgesetzt werden kann, verwendet, siehe dort Beispiele 2 bis 4.

Gemäß der älteren EP-A 604 813 werden Polysuccinimid oder Polyasparaginsäure erhalten, indem man Maleinamidsäure einer kontinuierlichen thermischen Polymerisation unterwirft. Gemäß der älteren EP-A- 613 920 werden Polysuccinimid oder Polyasparaginsäure durch Polymerisation von Edukten in einem Lösungsmittel erhalten, wobei die Reaktion kontinuierlich erfolgen kann. Gemäß der älteren WO 93/23452 wird Polyasparaginsäure durch Erhitzen von Maleinsäuremonoammoniumsalz auf 160 bis 200°C in einem Extruder erhalten.

Polyasparaginsäure läßt sich gemäß EP-A 256366 (US-A-4839461) zur Entfernung von Verkrustungen durch Härtebildner des Wassers (Scale Inhibition und Scale Deposition Removal) einsetzen. Gemäß US-A-5116513 und EP-A-454126 sind Polyasparaginsäure und ihre Salze wirksame Bestandteile von Waschmitteln und Düngemitteln.

Gemäß der vorliegenden Erfindung werden Polysuccinimid und Polyasparaginsäure kontinuierlich hergestellt.

Die vorliegende Erfindung betrifft daher ein.Verfahren zur Herstellung von Polysuccinimid und Polyasparaginsäure aus Maleinsäureanhydrid, Ammoniak und Wasser oder aus Maleinsäuremonoammoniumsalz oder aus Fumarsäuremonoammoniumsalz oder Monoamid oder aus einem Gemisch aus Maleinsäuremonoammoniumsalz/Maleinsäurediammoniumsalz oder aus Maleinamidsäure/Maleinsäuremonoammoniumsalz, dadurch gekennzeichnet, daß man die Edukte bei 120°C bis 200°C, insbesondere 150°C bis 180°C in einem Hochviskosreaktor bei einer Verweilzeit von 0,5 bis 300 Minuten einer thermischen, kontinuierlichen Polymerisation unterwirft und gegebenenfalls das erhaltene Produkte durch Hydrolyse zu Polyasparaginsäure bzw. einem Salz davon umsetzt, wobei der Hochviskosreaktor kein Extruder ist.

In einer weiteren Ausführungsform betrifft die vorliegende Erfindung ein Verfahren zur Herstellung von Polysuccinimid und Polyasparaginsäure aus Maleinsäureanhydrid, Ammoniak und Wasser oder aus Maleinsäuremonoammoniumsalz oder Monoamid, oder aus Fumarsäuremonoammoniumsalz oder Monoamid oder aus einem Gemisch aus Maleinsäuremonoammoniumsalz/Maleinsäurediammoniumsalz oder aus Maleinamidsäure/Maleinsäuremonoammoniumsalz, dadurch gekennzeichnet, daß man die Edukte bei 120°C bis 200°C, insbesondere 150°C bis 180°C in einem Hochviskosreaktor mit Wellenbehieizung bei einer verweilzeit von 0,5 bis 300 Minuten einer thermischen, kontinuierlichen Polymerisation unterwirft und gegebenenfalls das erhaltene Produkt durch Hydrolyse zu Polyasparaginsäure bzw. einem Salz davon umsetzt.

In einer weiteren Ausführungsform betrifft die vorliegende Erfindung ein Verfahren zur Herstellung von Polysuccinimid und Polyasparaginsäure aus Maleinsäureanhydrid, Ammoniak und Wasser oder aus Maleinsäuremonoammoniumsalz oder aus Fumarsäuremonoammoniumsalz oder Monoamid oder aus einem Gemisch aus Maleinsauremonoammoniumsalz/Maleinsaurediammoniumsalz oder aus Maleinamidsäure/Maleinsäuremonoammoniumsalz, dadurch gekennzeichnet, daß man die Edukte bei 120°C bis weniger als 160°C in einem Reaktor bei einer Verweilzeit von 0,5 bis 300 Minuten einer thermischen, kontinuierlichen Polymerisation unterwirft und gegebenenfalls das erhaltene Produkt durch Hydrolyse zu Polyasparaginsäure bzw. einem Salz davon umsetzt.

In einer besonders bevorzugten Ausführungsform betrifft die Erfindung ein verbessertes Verfahren zur Herstellung von Polysuccinimid und Polyasparaginsäure aus den genannten Edukten, dadurch gekennzeichnet, daß die Edukte in Substanz oder gelöst in geeigneten Lösungsmitteln kontinuierlich in einem Extruder mit Wellenbeheizung, insbesondere Zweiwellenextruder, bevorzugt selbstreinigend, bei Temperaturen von 120 bis 200°C, bevorzugt 120 bis 180°C, besonders bevorzugt 110°C bis 180°C und Verweilzeiten von 0,5 bis 300, bevorzugt 1 bis 60, insbesondere 2 bis 20 Minuten polymerisiert werden und das erhaltene Polysuccinimid gegebenenfalls durch Hydrolyse zu Polyasparaginsäure bzw. ihren Salzen umgesetzt wird.

In der besonders bevorzugten Ausführungsform des beheizten selbstreinigenden Zweiwellenextruders sind sowohl die Wellen als auch der Mantel von innen beheizbar, vorzugsweise durch einen Wärmeträger, der eine konstante Temperaturführung gewährleistet. Weiterhin ist eine Beheizung durch verschiedene von einander unabhängige Heizkreisläufe denkbar, wodurch verschiedene Temperaturzonen im Reaktor erzeugt werden können, die die Durchführung von Temperaturrampen ermöglichen.

Unter Polyasparaginsäure werden in der vorliegenden Erfindung sowohl die freie Polyasparaginsäure als auch ihre Salze verstanden.

Das erfindungsgemäß hergestellte Polysuccinimid enthält in einer bevorzugten Ausführungsform im wesentlichen wiederkehrende Succinimid-Einheiten folgender Struktur:

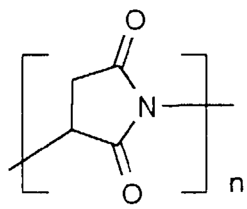

Zusätzlich können durch geeignete Reaktionsführung und Wahl der Edukte weitere wiederkehrende Einheiten enthalten sein, z.B.

a) Asparaginsäure-Einheiten der Formel

β-Form α-Form

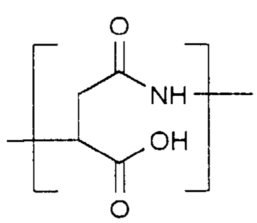

und

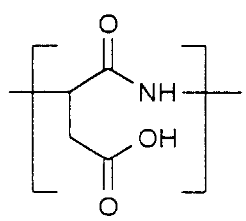

b) Apfelsäure-Einheiten der Formel

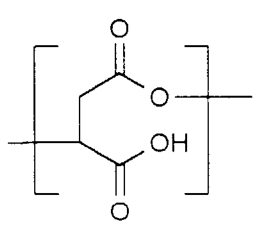

und

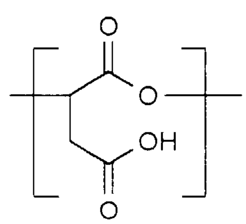

c) Maleinsäure- und Fumarsäure-Einheiten der Formel

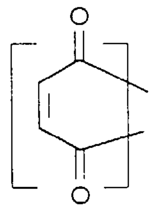 und 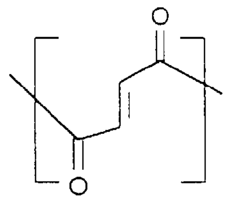

Die erfindungsgemäß hergestellte Polyasparaginsäure enthält in einer bevorzugten Ausführungsform im wesentlichen die unter a) angegebenen wiederkehrenden Einheiten, wobei im allgemeinen mindestens 50% in der β-Form vorliegen, und gegebenenfalls die oben angegebenen weiteren Strukturen.

Die Analyse der chemischen Struktur erfolgt, vorzugsweise mit $^{13}$C-NMR und nach Totalhydrolyse mit HPLC, GC und GC/MS.

Die erfindungsgemäß einzusetzenden Edukte wie z.B. Maleinamidsäure oder Maleinsäureammoniumsalz können in einem getrennten Prozess hergestellt werden und als trockene Reinsubstanzen, in Lösung oder in Gemischen mit niedrigerem Schmelzpunkt polymerisiert werden.

Die Edukte werden in einem kontinuierlich zu betreibenden Reaktor, einwellige und zweiwellige Hochviskosreaktoren, z.B. Disco-therm- und All-Phasen-Konti-Geräte der Firma List, Schneckenmaschinen, bevorzugt selbstreinigende Mehrwellenschnecken oder in einem Bandreaktor) einer thermischen Polymerisation mit einer Verweilzeit von 0,5 bis 300 Minuten. bevorzugt 1 bis 60 Minuten mit einer Temperatur von 150 bis 180°C (bevorzugt 160 bis 180°C) gegebenenfalls im Vakuum in ein Polymerisationsprodukt (Polysuccinimid) umgewandelt werden das durch Lösen einer Base in das entsprechende Polyasparaginsäuresalz überführt werden kann.

Insbesondere können alle Hochviskosreaktoren eingesetzt werden, die eine Abführung des freiwerdenden Wasserdampfes erlauben, bevorzugt solche mit großen Reaktionsvolumina, bevorzugt auch solche mit kinematischer Selbstreinigung der produktberührten Flächen und ebenfalls bevorzugt solche mit Wellenbeheizung. Aus Gründen der Korrosionsfestigkeit werden bevorzugt Maschinen aus korrosionsfestem Material, z.B Edelstahl eingesetzt.

Fig. 1 zeigt eine Prinzipskizze eines geeigneten Reaktors. Die Edukte treten durch den Produkt-Eintritt (1) ein, durchlaufen den Reaktor auf dem Weg (2) und treten am Produkt-Austritt (3) wieder aus. Ein Kühl- oder Heizmedium wird in (4) eingeführt und tritt bei (5) wieder aus. Der Antrieb der Wellen erfolgt durch einen Motor (6) über ein Getriebe (7). Entstehende Dämpfe und Gase können über einen Ausgasungsdom (8, 9) abgezogen werden.

Beispielhaft kann eine Schneckenmaschine vom Typ "Selfcleaner" der Fa. Lurgi eingesetzt werden :

Der "Selfcleaner" ist eine kontinuierlich selbstreinigende Gleichdrallschneckenmaschine mit Hohlwellen, die zur Temperierung von einem Wärmeträger durchströmt werden. Das zu behandelnde Produkt wird dabei von den rotierenden Hohlschnecken stetig durch den Trog des Gerätes gefördert. Oberhalb der Schneckenwellen befindet sich ein Gasraum zur Abführung der Brüden.

Der flüssige Wärmeträger strömt zuerst durch die Hohlwellen, tritt dann in der Nähe des Produktaustrittes in den letzten hohlen Gewindegang ein und durchströmt die hohlen Gewindegänge im Gegenstrom zum im Trog transportierten Produkt. Der entstehende Wasserdampf wird in Produktrichtung abgeführt.

Die Hohlschnecken beim "Selfcleaner" haben ein selbstreinigendes Rundprofil, so daß eine Schnecke die andere stetig reinigt. Das Gewinde der einen Hohlschnecke ragt bis auf ein gewisses Spiel, ganz in die Gewindelücke bis zu Hohlwelle der anderen Schnecke. Die Hohlwellen werden aus geformten Blechen geschweißt und in der Regel nicht mechanisch nachgearbeitet.

Im "Selfcleaner" werden vorzugsweise schwierig zu behandelnde Produkte verarbeitet, die bei Wärmebehandlung zum Ankleben und vor allem zum Ankrusten an den Heizflächen neigen. Das Produkt wird in den Gewindelücken der beiden Hohlschnecken in Form einer nicht geschlossenen Acht transportiert. Im Eingriffsbereich der Hohlschnecken wird das Produkt durch die Relativgeschwindigkeit der Hohlschnecken gemischt.

Erfindungsgemäß sind auch andere großvolumige Hochviskosreaktoren einzusetzen, beispielsweise der Typ "AP-Conti" der Fa. List, Schneckenwärmetauscher und auch Polymerschnecken sind ebenfalls erfindungsgemäß einzusetzen.

Von Vorteil ist der direkte Einsatz der bei der Umsetzung von Maleinsäureanhydrid, Ammoniak und Wasser entstehenden Rohlösung in den oben beschriebenen Hochviskosreaktoren. Die eingesetzte Rohlösung kann einen Ammoniummaleatgehalt von 50% und höher haben. Vorteilhaft ist hierbei, daß die Entwässerung und Polymerisation gleichzeitig verlaufen. Das Wasser hat zwei Funktionen. Es wirkt als Lösungsmittel und unterstützt die besonders guten Wärmeübertragungseigenschaften der oben genanten Reaktoren. Dadurch wird die Polymerisationstemperatur deutlich erniedrigt und die Reaktion kann bei Temperaturen zwischen 120°C und 180°C, bevorzugt 140°C bis 155°C durchgeführt werden. Das Wasser kann während der Polymerisation vollständig entfernt werden. Man erhält eine trockene pulverige Masse, die zu einem überwiegenden Anteil aus Polysuccinimid besteht. Eine Variante besteht darin, einen

Teil des Wassers in der Reaktionsmischung zu belassen. Man erhält dann eine - je nach verbleibendem Wassergehalt - viskose Masse bis hin zur Lösung, die aus einem Gemisch von Polyasparaginsäure und Polysuccinimid mit wechselnden Anteilen besteht. Diese Variante hat den Vorteil, daß das erhaltene Produkt deutlich besser in Wasser löslich ist und damit eine einfachere Umsetzung zum Salz gestattet. Die Maleinsäurederivate haben in den oben beschriebenen Reaktoren eine Verweilzeit von 0.5 bis 300 Minuten, bevorzugt 1 bis 60 Minuten, besonders bevorzugt 2 bis 20 Minuten. Die Polymerisationsprodukte werden durch Lösen in einer Base bei 20 bis 95°C, bevorzugt 40 bis 70°C, besonders bevorzugt 50 bis 70°C in das entsprechende Polyasparaginsauresalz überführt. Es ist auch möglich, durch Hydrolyse in Wasser bei 80 - 100°C oder durch Behandlung des Salzes mit Säuren oder sauren Ionenaustauschern bereits an dieser Stelle die freie Polyasparaginsäure zu erhalten. Das Produkt wird durch Sprühtrocknung als feines Pulver erhalten.

Die nach diesem Verfahren hergestellten Salze (z.B. Na-Salz) weisen die Eigenschaften eines Dispergier- und Sequestriermittels sowie Korrosionsinhibitors auf und können anwendungstechnisch entsprechend verwendet werden. Darüber hinaus kann eine antimikrobielle Wirksamkeit d.h. gegen Pilze und Bakterien nachgewiesen werden.

Das hergestellte Polymer zeigt in Abhängigkeit von den Reaktionsbedingungen z.B Verweilzeit und Temperatur der thermischen Polymerisation unterschiedliche Kettenlängen bzw. Molekulargewichte nach gelpermeationschromatographischen Analyse. ($M_w$ = 500 bis 10000, bevorzugt 1000 bis 5000, besonders bevorzugt 2000 bis 4000).

Verwendung finden die erfindungsgemäßen Verbindungen, insbesondere als Dispergiermittel, Waschmittelzusatz, Sequestriermittel, scale inhibitor, Korrosionsinhibitor vor allem für Messing als Mikrobizid und in Düngemitteln.

**Beispiele**

Die Polymerisationsreaktionen wurden in einem Hochviskosreaktor vom Typ Lurgi selfcleaner der Fa Lurgi durchgeführt. Der "Selfcleaner" ist eine kontinuierlich selbstreinigende Gleichdrallschneckenmaschine mit Hohlwellen. Sowohl die Hohlwellen als auch der Gehäusemantel wird zur Temperierung von einem Wärmeträger durchströmt. Die Temperaturausführung ist folgendermaßen: Der flüssige Wärmeträger strömt zuerst durch die Hohlwellen, tritt dann in der Nähe des Produktaustrittes in den letzten hohlen Gewindegang ein und durchströmt die Gewindegänge im Gegenstrom zum im Trog transportierten Produkt. Das Gerät besitzt mehrere Ausgasungsdome, die bei Bedarf geöffnet und geschlossen werden können. Mit ihrer Hilfe kann ein beliebiger Wasser bzw- Wasserdampfgehalt im Reaktionsgemisch eingestellt werden. Die Hohlschnecken des "Selfcleaner" haben ein selbstreinigendes Rundprofil. Das Gewinde der einen Hohlschnecke ragt, bis auf ein gewisses Spiel, ganz in die Gewindelücke der anderen Schnecke. Das Spiel zwischen den beiden Hohlwellen einerseits und zwischen den Hohlwellen und dem Trog andererseits beträgt ca. 3 mm. Das verwendete Gerät hat folgende Maße:

$$L=900mm, \varnothing= 100mm$$

**Beispiel 1**

Herstellung von Polysuccinimid aus Maleinamidsäure

16 kg Maleinamidsäure (139,1 mol) Schmelzpunkt 166°C) wurden kontinuierlich mit einer Dosierrate von 7 kg/h über eine Förderschnecke in den Mischungsteil der auf 172°C - 174°C geheizten Schnecke gebracht. In der Mischungszone wird auf der heißen Oberfläche der Schneckenwellen sofort ein dünner Schmelzfilm gebildet, der unter Entweichen von Reaktionswasser polymerisiert. Im weiteren Verlauf der Schnecke wurde das Polymer vollständig getrocknet und verließ die Schnecke als grobkörnige bis pulverige Masse. Man erhält 12 660 g Produkt, das durch folgende Analysen charakterisiert wird. (Tabelle 1)

**Beispiel 2**

Herstellung von Polysuccinimid aus Maleinsäuremonoammoniumsalz

Der in Beispiel 1 beschriebene Versuch wurde mit Maleinsäuremonoammoniumsalz als Edukt wiederholt. 5 kg Maleinsäuremonoammoniumsalz (37,6 mol) (Schmelzpunkt 171°C wurden mit einer Dosierrate von 5 kg/h der auf 174-176°C erhitzten Schnecke zugeführt. Als Produkt wurden 3 542 g einer grobkörnigen bis pulvrigen Masse erhalten. (zur Analytik siehe Tabelle I)

**Beispiel 3**

Herstellung von Polysuccinimid aus einer wässrigen Maleinsäuremonoammoniumsalzlösung

6 800 g 25 %ige $NH_3$-Lösung (100 mol) werden bei 60°C in einer Stunde zu einer Mischung von 9 800 g (100 mol) Maleinsäureanhydrid und 2 825 g $H_2O$ gegeben. Man erhält eine Suspension des Monoammoniumsalzes der Maleinsäure in Wasser. Diese Suspension geht bei Temperaturen über 70°C in eine homogene Lösung über, die einen Feststoffgehalt von ca. 59,5 % hat. Diese ca. 75°C heiße Lösung wurde mit einer Geschwindigkeit von 3 kg/h in den Mischungsteil der auf 152°C bis 154°C erhitzten Schnecke eindosiert. Im Mischungsteil fand sofort ein Ausdampfen des Lösungswassers statt und es bildete sich kurzzeitig das trockene Ammoniumsalz, welches jedoch in der gesättigten Wasserdampfatmosphäre innerhalb der Schnecke wieder angelöst wurde. Dieser Vorgang führte zur Bildung einer Mischphase aus hochkonzentrierter Lösung und Schmelze. Dieser Effekt ermöglicht die Bildung des charakteristischen Schmelzfilmes schon bei einer Temperatur von 148°C bis 152°C (gemessen in der Schmelze), die deutlich unter der Schmelztemperatur (171°C) des reinen Salzes liegt. Im weiteren Verlauf der Schnecke wurde dann das Lösungs- und Reaktionswasser vollständig entfernt und man erhielt wiederum 9 130 g eines grobkörnigen bis pulverigen Produktes. (zur Analytik siehe Tabelle I)

Charakterisierung der erhaltenen Produkte

Zur Charakterisierung der Produkte wurden Säurezahl, Elementarzusammensetzung und Molekulargewichtsverteilung bestimmt Weiterhin wurden anwendungstechnische Tests bezüglich der Sequestrier- und Dispergierwirkung des Produktes durchgeführt. (Tabelle I)

Tabelle I

| Beispiele | 1 | 2 | 3 |
|---|---|---|---|
| Elementarzusammensetzung | | | |
| C [Gew.-%] | 46,6 | 46,6 | 45,0 |
| H [Gew.-%] | 4,0 | 3,7 | 4,0 |
| N [Gew.-%] | 14,1 | 13,3 | 13,5 |
| $NH_4$ [Gew.-%] | 1,5 | 0,7 | 1,1 |
| $H_2O$ (Gew.-%] | 0,3 | 0,3 | 0,4 |
| Molmassenverteilung mit GPC | | | |
| $M_w$ | 2608 | 3050 | 3350 |
| Säurezahl (mg(NaOH)/g) | 397 | 401 | 426 |

Herstellung von Polyasparaginsäure-Na-Salz

Jeweils 30 g = ca. 0,28 mol des erhaltenen Polysuccinimids/Polyasparaginsäuregemischs wird in ca. 50 ml $H_2O$ suspendiert und bei ca. 60°C mit 50 %iger Natronlauge bis zu einem pH-Wert von 8,5 gelöst. Die Lösung wird im Vakuum eingeengt und das erhaltene Polyasparaginsäure Na-Salz vollständig getrocknet. Man erhält ca. 38 g.

Anwendungstechnische Tests durchgeführt nach Überführung ins Na-Salz:

a) Sequestrieren eines Tensides

Prüfung der Trübungsintensität einer Alkylbenzolsulfonsäure-Na-Salz-Lösung in Leitungswasser (Gesamtwasserhärte: 14 Grad deutscher Härte)

1 ml 10 %ige Lösung eines für Waschmittel üblichen Tensides auf Basis einer Alkylbenzolsulfosäure (Marlon A 375) wird unter Zugabe 0,1 g PAS-Na-Salz mit Leitungswasser auf 100 ml aufgefüllt. Die entstandene Lösung hat eine Standstabilität von über drei Wochen. Ohne Zusatz von PAS-Na-Salz trübt sich die Lösung in wenigen Minuten.

b) Dispergieren von Zinkoxid

0,3 g PAS-Na-Salz werden mit 10 g Zinkoxid in 200 ml Leitungswasser dispergiert. Die Dispersion wird in einen Meßzylinder überführt. Nach drei Stunden werden Proben aus unterschiedlichen Stellen des Meßzylinders entnommen und auf ihren Zinkoxidgehalt untersucht. Dabei wurde gefunden, daß der Zinkoxidgehalt infolge der guten dispergierenden Wirkung immer gleich ist. Weiterhin wurde die Sedimentationsstabilität nach 3 h und 24 h bestimmt. In beiden Fällen wurde praktisch keine Sedimentationsschicht am Boden des Meßzylinders festgestellt.

## Patentansprüche

1. Verfahren zur Herstellung von Polysuccinimid und Polyasparaginsäure aus Maleinsäureanhydrid, Ammoniak und Wasser oder aus Maleinsäuremonoammoniumsalz oder aus Fumarsäuremonoammoniumsalz oder Monoamid oder aus einem Gemisch aus Maleinsäuremonoammoniumsalz/Maleinsäurediammoniumsalz oder aus Maleinamidsäure/Maleinsäuremonoammoniumsalz, dadurch gekennzeichnet, daß man die Edukte bei 120°C bis 200°C in einem Hochviskosreaktor bei einer Verweilzeit von 0,5 bis 300 Minuten einer thermischen, kontinuierlichen Polymerisation unterwirft und gegebenenfalls das erhaltene Produkte durch Hydrolyse zu Polyasparaginsäure bzw. einem Salz davon umsetzt, wobei der Hochviskosreaktor kein Extruder ist.

2. Verfahren zur Herstellung von Polysuccinimid und Polyasparaginsäure aus Maleinsäureanhydrid, Ammoniak und Wasser oder aus Maleinsäuremonoammoniumsalz oder Monoamid, oder aus Fumarsäuremonoammoniumsalz oder Monoamid oder aus einem Gemisch aus Maleinsäuremonoammoniumsalz/Maleinsäurediammoniumsalz oder aus Maleinamidsäure/Maleinsäuremonoammoniumsalz, dadurch gekennzeichnet, daß man die Edukte bei 120°C bis 200°C in einem Hochviskosreaktor mit Wellenbeheizung bei einer Verweilzeit von 0,5 bis 300 Minuten einer thermischen, kontinuierlichen Polymerisation unterwirft und gegebenenfalls das erhaltene Produkt durch Hydrolyse zu Polyasparaginsäure bzw. einem Salz davon umsetzt.

3. Verfahren zur Herstellung von Polysuccinimid und Polyasparaginsäure aus Maleinsäureanhydrid, Ammoniak und Wasser oder aus Maleinsäuremonoammoniumsalz oder aus Fumarsäuremonoammoniumsalz oder Monoamid oder aus einem Gemisch aus Maleinsäuremonoammoniumsalz/Maleinsäurediammoniumsalz oder aus Maleinamidsäure/Maleinsäuremonoammoniumsalz, dadurch gekennzeichnet, daß man die Edukte bei 120°C bis weniger als 160°C in einem Hochviskos-Reaktor bei einer Verweilzeit von 0,5 bis 300 Minuten einer thermischen, kontinuierlichen Polymerisation unterwirft und gegebenenfalls das erhaltene Produkt durch Hydrolyse zu Polyasparginsäure bzw. einem Salz davon umsetzt.

4. Verfahren nach Anspruch 2 oder 3, dadurch gekennzeichnet, daß die Edukte in Substanz oder gelöst kontinuierlich in einem selbstreinigenden Zweiwellenextruder polymerisiert werden.

5. Verfahren zur Herstellung von Polyasparaginsäure und deren Salze, dadurch gekennzeichnet, daß man das gemäß wenigstens einem der vorhergehenden Ansprüche erhaltene Polymerisationsprodukt hydrolysiert.

6. Verfahren nach wenigstens einem der vorhergehenden Ansprüche, dadurch gekennzeichnet, daß als Edukte wäßrige Lösungen von Maleinsäureanhydrid und Ammoniak verwendet werden.

7. Verfahren nach Anspruch 2 oder 3, dadurch gekennzeichnet, daß ein Zweiwellenextruder verwendet wird, der selbstreinigend ist und Hohlwellen aufweist, die zur Temperierung mit einem Wärmeträger durchströmt werden.

8. Verfahren nach Anspruch 1 oder 2, dadurch gekennzeichnet, daß die Polymerisation bei 150°C bis 180°C durchgeführt wird.

9. Verfahren nach Anspruch 2, dadurch gekennzeichnet, daß die Verweilzeit im Extruder 1 bis 60 Minuten dauert.

10. Verfahren zur Herstellung von Polyasparaginsäuresalz, dadurch gekennzeichnet, daß man das gemäß wenigstens einem der vorhergehendenen Ansprüche erhaltene Produkt mit Wasser bei einem pH von 12 bis 6 behandelt.

## Claims

1. Process for preparing polysuccinimide and polyaspartic acid from maleic anhydride, ammonia and water or from monoammonium maleate or from the monoammonium salt or monoamide of fumaric acid or from a mixture of monoammonium maleate/diammonium maleate or from maleic monoamide/monoammonium maleate, characterized in that the starting materials are subjected to a thermal, continuous polymerization at from 120°C to 200°C in a high viscosity reactor at a residence time of from 0.5 to 300 minutes and the product obtained is optionally converted by hydrolysis into polyaspartic acid or a salt thereof, where the high viscosity reactor is not an extruder.

2. Process for preparing polysuccinimide and polyaspartic acid from maleic anhydride, ammonia and water or from the monoammonium salt or monoamide of maleic acid or from the monoammonium salt or monoamide of fumaric

acid or from a mixture of monoammonium maleate/diammonium maleate or from maleic monoamide/monoammonium maleate, characterized in that the starting materials are subjected to a thermal, continuous polymerization at from 120°C to 200°C in a high-viscosity reactor having shaft heating at a residence time of from 0.5 to 300 minutes and the product obtained is optionally converted by hydrolysis into polyaspartic acid or a salt thereof.

**3.** Process for preparing polysuccinimide and polyaspartic acid from maleic anhydride, ammonia and water or from monoammonium maleate or from the monoammonium salt or monoamide of fumaric acid or from a mixture of monoammonium maleate/diammonium maleate or from maleic monoamide/monoammonium maleate, characterized in that the starting materials are subjected to a thermal, continuous polymerization at from 120°C to < 160°C in a high-viscosity reactor at a residence time of from 0.5 to 300 minutes and the product obtained is optionally converted by hydrolysis into polyaspartic acid or a salt thereof.

**4.** Process according to Claim 2 or 3, characterized in that the starting materials are continuously polymerized in bulk or in solution in a self-cleaning twin-screw extruder.

**5.** Process for preparing polyaspartic acid and salts thereof, characterized in that the polymerization product obtained in accordance with at least one of the preceding claims is hydrolysed.

**6.** Process according to at least one of the preceding claims, characterized in that the starting materials used are aqueous solutions of maleic anhydride and ammonia.

**7.** Process according to Claim 2 or 3, characterized in that the twin-screw extruder used is self-cleaning and has hollow shafts through which a hear transfer medium is made to flow for heating and cooling.

**8.** Process according to Claim 1 or 2, characterized in that the polymerization is carried out at from 150°C to 180°C.

**9.** Process according to Claim 2, characterized in that the residence time in the extruder is from 1 to 60 minutes.

**10.** Process for preparing a salt of polyaspartic acid, characterized in that the product obtained in accordance with at least one of the preceding claims is treated with water at a pH from 12 to 6.

**Revendications**

**1.** Procédé pour la préparation de polysuccinimide et d'acide polyaspartique à partir d'anhydride maléique, d'ammoniac et d'eau ou à partir d'un sel monoammonique de l'acide maléique ou à partir d'un sel monoammonique ou d'un monoamide de l'acide fumarique ou encore à partir d'un mélange constitué d'un sel monoammonique de l'acide maléique/sel diammonique de l'acide maléique ou d'acide maléamique/sel monoammonique de l'acide maléique, caractérisé en ce qu'on soumet les éduits à une température de 120°C à 200°C dans un réacteur destiné à des substances très visqueuses, pendant un temps de séjour de 0,5 à 300 minutes, à une polymérisation thermique en continu, et on transforme éventuellement par hydrolyse le produit obtenu pour obtenir de l'acide polyaspartique, respectivement un sel de ce dernier, le réacteur destiné à des substances très visqueuses n'étant pas une extrudeuse.

**2.** Procédé pour la préparation de polysuccinimide et d'acide polyaspartiques à partir d'anhydride maléique, d'ammoniac et d'eau ou à partir d'un sel monoammonique ou d'un monoamide de l'acide maléique ou à partir d'un sel monoammonique ou d'un monoamide de l'acide fumarique ou encore à partir d'un mélange constitué d'un sel monoammonique de l'acide maléique/sel diammonique de l'acide maléique ou d'acide maléamique/sel monoammonique de l'acide maléique, caractérisé en ce qu'on soumet les éduits à une température de 120°C à 200°C dans un réacteur destiné à des substances très visqueuses avec chauffage des vis sans fin, pendant un temps de séjour de 0,5 à 300 minutes, à une polymérisation thermique en continu, et on transforme éventuellement par hydrolyse le produit obtenu pour obtenir de l'acide polyaspartique, respectivement un sel de ce dernier.

**3.** Procédé pour la préparation de polysuccinimide et d'acide polyaspartique à partir d'anhydride maléique, d'ammoniac et d'eau ou à partir d'un sel monoammonique de l'acide maléique ou encore à partir d'un sel monoammonique ou d'un monoamide de l'acide fumarique ou encore à partir d'un mélange constitué d'un sel monoammonique de l'acide maléique/sel diammonique de l'acide maléique ou d'acide maléamique/sel monoammonique de l'acide maléique, caractérisé en ce qu'on soumet les éduits à une température de 120°C à moins de 160°C dans un

réacteur destiné à des substances très visqueuses, pendant un temps de séjour de 0,5 à 300 minutes, à une polymérisation thermique en continu et on transforme éventuellement par hydrolyse le produit obtenu pour obtenir de l'acide polyaspartique, respectivement un sel de ce dernier.

**4.** Procédé selon la revendication 2 ou 3, caractérisé en ce qu'on polymérise les éduits en tant que tels ou à l'état dissous en continu dans une extrudeuse à double vis sans fin de type autonettoyant.

**5.** Procédé pour la préparation d'acide polyaspartique et de ses sels, caractérisé en ce qu'on soumet à une hydrolyse le produit de polymérisation obtenu conformément à au moins une des revendications précédentes.

**6.** Procédé selon au moins une des revendications précédentes, caractérisé en ce qu'on utilise, à titre d'éduits, des solutions aqueuses d'anhydride maléique et d'ammoniac.

**7.** Procédé selon la revendication 2 ou 3, caractérisé en ce qu'on utilise une extrudeuse à double vis sans fin qui est du type autonettoyant et qui présente des arbres creux à travers lesquels on fait circuler un caloporteur à des fins de traitement thermique.

**8.** Procédé selon la revendication 1 ou 2, caractérisé en ce qu'on effectue la polymérisation à une température de 150°C à 180°C.

**9.** Procédé selon la revendication 2, caractérisé en ce que le temps de séjour dans l'extrudeuse s'élève de 1 à 60 minutes.

**10.** Procédé pour la préparation d'un sel de l'acide polyaspartique, caractérisé en ce qu'on traite avec de l'eau à un pH de 12 à 6 le produit obtenu conformément à au moins une des revendications précédentes.

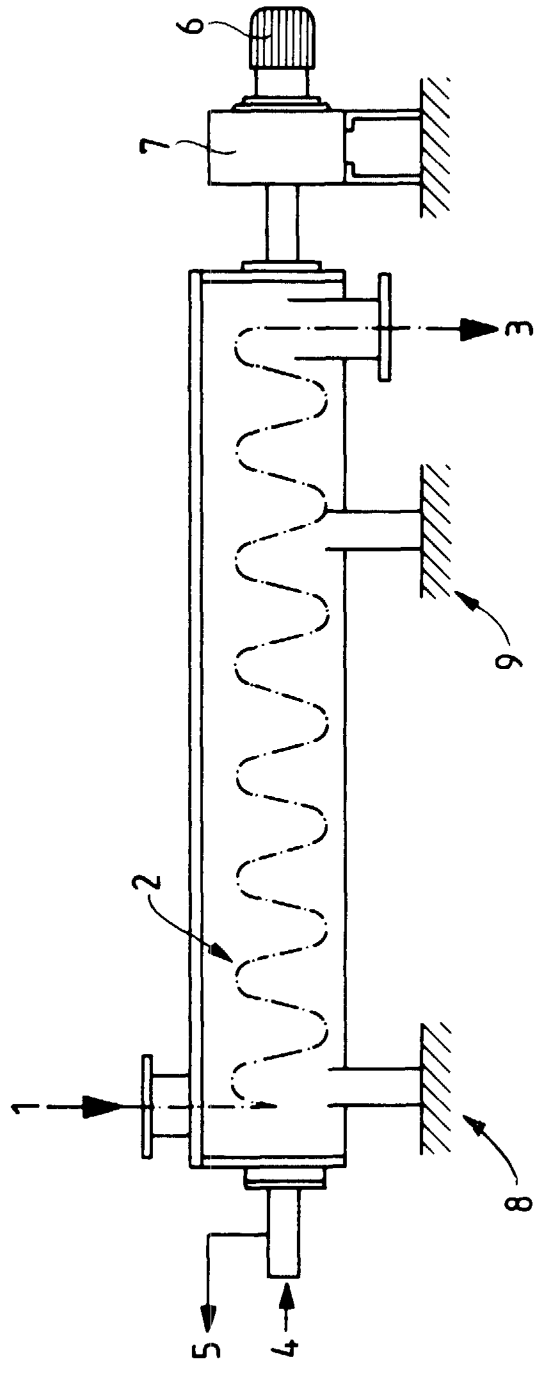


Fig.1